# EUROPÄISCHE PATENTSCHRIFT

(11) **EP 3 632 749 B1**
(45) Veröffentlichungstag und Bekanntmachung des Hinweises auf die Patenterteilung: **07.06.2023**
(21) Anmeldenummer: 19195679.6
(22) Anmeldetag: 05.09.2019
(51) Int. Cl.: B60R 13/02

(54) **DURCHLEUCHTBARES VERKLEIDUNGSTEIL FÜR EIN KRAFTFAHRZEUG UND VERFAHREN ZUR HERSTELLUNG EINES VERKLEIDUNGSTEILS**
TRANSLUCENT CLADDING SECTION FOR A MOTOR VEHICLE AND METHOD FOR PRODUCING A CLADDING SECTION
ÉLÉMENT D'HABILLAGE TRANSPARENT POUR VÉHICULE AUTOMOBILE ET PROCÉDÉ DE FABRICATION D'UN ÉLÉMENT D'HABILLAGE

(30) Priorität: 02.10.2018 DE 102018124384
(43) Veröffentlichungstag der Anmeldung: 08.04.2020
(73) Patentinhaber: REHAU Automotive SE & Co. KG, 95111 Rehau (DE)
(72) Erfinder: Valentin, Stefan, 08606 Triebel (DE); Göschel, Rick, 95183 Feilitzsch (DE)

(56) Entgegenhaltungen:
- EP-A1- 2 218 610
- EP-A2- 2 060 443
- DE-A1-102008 041 701
- DE-A1-102010 051 166
- DE-A1-102012 215 165
- DE-A1-102013 202 223
- DE-B4-102010 032 190

## Beschreibung

Die vorliegende Erfindung betrifft ein durchleuchtbares Verkleidungsteil für ein Kraftfahrzeug umfassend einen Grundkörper aus einem transluzenten oder transparenten Polymermaterial, welches für Spektralbereiche des sichtbaren Lichts mit einer geringen Absorption durchstrahlbar ist, und umfassend wenigstens eine auf dem Grundkörper aufgebrachte farbgebende Beschichtung, wobei die farbgebende Beschichtung vorzugsweise durch eine Lackschicht oder eine Lackfolie gebildet ist, wobei die farbgebende Beschichtung die Spektralbereiche des sichtbaren Lichts weitestgehend absorbiert und, wobei zur Durchleuchtung des Grundkörpers die farbgebende Beschichtung bereichsweise eine Vielzahl von punktförmigen Perforationen aufweist, die die farbgebende Beschichtung vollständig durchdringen und, wobei über der perforierten farbgebenden Beschichtung eine die farbgebende Beschichtung und die Perforationen versiegelnde Klarlackschicht, welche für Spektralbereiche des sichtbaren Lichts mit einer geringen Absorption durchstrahlbar ist, aufgebracht ist.

Ein entsprechendes Verkleidungsteil für ein Kraftfahrzeug kann der DE 10 2010 032 190 B4 entnommen werden, welche dem Oberbegriff des Anspruchs 1 entspricht.

Hauptproblematik bei der Herstellung von diesen gattungsgemäßen durchleuchtbaren Verkleidungsteilen ist der Zielkonflikt zum einen die Größe der Perforationen so zu wählen, dass diese zumindest auf eine größere Entfernung mit dem bloßen Auge nicht erkennbar sind. Und zum anderen die Größe und Verteilung der Perforationen nicht so klein werden zu lassen, dass der die Klarlackschicht bildende Klarlack die Perforationen nicht zu füllen vermag. Bei einer unzureichenden Füllung der Perforationen mit dem Klarlack der Klarlackschicht kommt es zu Einfallstellen im Bereich der Perforationen, die sich sowohl auf das optische Erscheinungsbild als auch auf die Durchstrahlbarkeit des Verkleidungsteils negativ auswirken.

Die Erfindung stellt sich daher die Aufgabe ein Verkleidungsteil mit den eingangs beschriebenen Merkmalen anzugeben, das gegenüber dem Stand der Technik mit dem bloßen Auge schwer erkennbare Perforationen bei gleichzeitig gleichmäßiger Ausbildung der Klarlackschicht aufweist.

Erfindungsgemäß wird diese Aufgabe gelöst durch ein durchleuchtbares Verkleidungsteil für ein Kraftfahrzeug umfassend:
- einen Grundkörper aus einem transluzenten oder transparenten Polymermaterial, welches für Spektralbereiche des sichtbaren Lichts mit einer geringen Absorption durchstrahlbar ist, und
- wenigstens eine auf dem Grundkörper aufgebrachte farbgebende Beschichtung,
wobei die farbgebende Beschichtung vorzugsweise durch eine Lackschicht oder eine Lackfolie gebildet ist, wobei die farbgebende Beschichtung die Spektralbereiche des sichtbaren Lichts weitestgehend absorbiert, und wobei zur Durchleuchtung des Grundkörpers die farbgebende Beschichtung bereichsweise eine Vielzahl von punktförmigen Perforationen aufweist, die die farbgebende Beschichtung vollständig durchdringen, und wobei über der perforierten farbgebenden Beschichtung eine die farbgebende Beschichtung und die Perforationen versiegelnde Klarlackschicht, welche für Spektralbereiche des sichtbaren Lichts mit einer geringen Absorption durchstrahlbar ist, aufgebracht ist, wobei erfindungsgemäß der Durchmesser D der Perforationen in einem Bereich von 175 µm bis 500 µm, bevorzugt in einem Bereich von 175 µm bis 300 µm, liegt und, wobei der Abstand A zwischen den Mittelpunkten M zueinander benachbarter Perforationen in einem Bereich zwischen dem 1,0-fachen bis 5,0-fachen, bevorzugt in einem Bereich zwischen dem 1,5-fachen bis 4,0-fachen des Durchmessers D der benachbarten Perforationen liegt, sodass die Klarlackschicht ergänzend auch die Perforationen ausfüllt.

Es hat sich gezeigt, dass der erfindungsgemäße Durchmesserbereich der Perforationen von 175 µm bis 500 µm, bevorzugt in einem Bereich von 175 µm bis 300 µm, in Kombination mit einem Abstand A zwischen den Mittelpunkten M zueinander benachbarter Perforationen in einem Bereich zwischen dem 1,0-fachen bis 5,0-fachen, bevorzugt in einem Bereich zwischen dem 1 ,5-fachen bis 4,0-fachen des Durchmessers D der benachbarten Perforationen ein Optimum zwischen einer geringen Erkennbarkeit der Perforationen mit dem bloßen Auge und einer guten Benetzung und Füllung der Perforationen mit der Klarlackschicht darstellt.

Zwischen dem Grundkörper und der farbgebenden Beschichtung kann zusätzlich eine Haftvermittlerschicht oder können zusätzlich Haftvermittlerschichten angeordnet sein. Hierbei kann die Vielzahl von punktförmigen Perforationen auch die Haftvermittlerschicht oder die Haftvermittlerschichten vollständig durchdringen.

Das transluzente oder transparente Polymermaterial des Grundkörpers kann bevorzugt Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthalten oder hieraus gebildet sein.

Das transluzente oder transparente Polymermaterial des Grundkörpers kann zusätzlich einen Füllstoff aufweisen. Der Füllstoff kann Wollastonit und/oder amorphes Siliziumdioxid und/oder Cristobalit und/oder Feldspat und/oder Quarzgut und/oder Glas und/oder Glasfasern umfassen.

Der Füllstoff kann bevorzugt faserförmig und/oder nadelförmig sein.

Insbesondere faserförmiges und/oder nadelförmiges Wollastonit hat sich als bevorzugt geeignet erwiesen.

Bevorzugt beträgt der Gehalt an Talkum und/oder Kohlenstoff und/oder Titandioxid in dem Füllstoff allein oder in Summe weniger als 10 Vol.%, bevorzugt weniger als 5 Vol.%, weiter bevorzugt weniger als 2 Vol.%, noch weiter bevorzugt weniger als 1 Vol.%.

Der Füllstoffgehalt des Füllstoffs in dem transluzenten oder transparenten Polymermaterial des Grundkörpers weißt bevorzugt einen Wert von 10 Vol.% bis 30 Vol.%, weiter bevorzugt von 15 Vol.% bis 20 Vol.% auf. Vorstehende Wertebereiche stellen das Optimum zwischen geringe Absorption für Spektralbereiche des sichtbaren Lichts und gleichzeitig ausreichend geringer Wärmeausdehnung und hoher Schlagzähigkeit dar.

Das transluzente oder transparente Polymermaterial des Grundkörpers ist bevorzugt ein für wenigstens eine Laserwellenlänge transparentes Material. Dies bedeutet insbesondere, dass das Polymermaterial so gewählt ist, dass es von wenigstens einem herkömmlichen in der Lasermaterialbearbeitung eingesetzten Lasersystem bzw. dessen verwendeter Laserwellenlänge durchstrahlbar ist, also die Energie der Laserstrahlung nicht signifikant in das Polymermaterial eingebracht oder eingekoppelt wird.

Für den Fall, dass die farbgebende Beschichtung durch eine Lackfolie gebildet ist, kann diese Lackfolie mehrschichtig aufgebaut sein. Hierbei kann die Lackfolie wenigstens eine Trägerfolie, bevorzugt aus einem transluzenten oder transparenten Material, welches für Spektralbereiche des sichtbaren Lichts mit einer geringen Absorption durchstrahlbar ist, und wenigsten eine auf der Trägerfolie angeordnete farbgebende Lackschicht umfassen. Die Lackschicht auf der Trägerfolie kann eine Dicke im Bereich von 5 µm bis 100 µm, bevorzugt im Bereich von 10 µm bis 60 µm aufweisen. Die Trägerfolie selbst kann eine Dicke im Bereich von 50 µm bis 1000 µm, bevorzugt im Bereich von 150 µm bis 600 µm aufweisen.

Die Perforationen können regelmäßig und/oder versetzt zueinander angeordnet sein. Es ist jedoch auch denkbar, dass die Perforationen untereinander keinen einheiltich gleichen Abstand aufweisen. Erfindungsgemäß müssen die Abstände der Perforationen nur innerhalb des vorstehend angegebenen Bereichs liegen, damit eine Ausfüllung der Perforationen zuverlässig gewährleistet ist.

Zusätzlich kann eine Maskierungsschicht vorgesehen sein. Die Maskierungsschicht kann insbesondere zwischen dem Grundkörper und der farbgebenden Beschichtung und/oder auf der Rückseite des Grundkörpers angeordnet sein kann. Bei der Verwendung einer Lackfolie als farbgebender Beschichtung kann die Maskierungsschicht insbesondere auf der der Sichtseite der Folie gegenüberliegenden Rückseite der Lackfolie angeordnet sein. Die Maskierungsschicht weist im Bereich der Perforationen lokal Bereiche auf, die für Spektralbereiche des sichtbaren Lichts mit einer geringen Absorption durchstrahlbar ist. Diese Bereiche können insbesondere durch Ausnehmungen in der Maskierungsschicht gebildet sein. Die Maskierungsschicht ist ansonsten selbstredend für den Spektralbereich des sichtbaren Lichts weitestgehend intransparent und/oder undurchlässig. Die Maskierungsschicht kann insbesondere als Folie, als Schicht einer Folie oder im Siebdruckverfahren, einem Tampondruckverfahren, einem herkömmlichen Streich- Tauch, oder Sprühlackierverfahren oder mit einem Tintenstrahldruckverfahren aufgebracht sein.

Der Grundkörper weist bevorzugt eine Wandstärke im Bereich von 0,8 mm bis 4,5 mm auf.

Auf der Klarlackschicht kann eine zusätzliche Schutzschicht vorgesehen sein, wobei die zusätzliche Schutzschicht insbesondere ein Silan oder eine Silanverbindung umfassen kann.

Unter einer farbgebenden Beschichtung wird vorliegend auch eine den Farbton weiß oder den Farbton schwarz hervorrufende Beschichtung verstanden.

Die farbgebende Beschichtung muss nicht zwingend aus einer einzelnen Schicht bestehen, sondern kann in sich aus mehreren Schichten gebildet sein. Insbesondere bei einer Lackschicht als farbgebende Beschichtung muss die Lackschicht nicht zwingend aus einer einzelnen Schicht bestehen, sondern kann in sich aus mehreren Schichten gebildet sein.

Das Verkleidungsteil ist eine Stoßfängerverkleidung oder eine Heckklappenverkleidung oder eine Kotflügelverkleidung oder ein Spoiler eines Kraftfahrzeuges, oder ist ein Bauteil oder eine Baugruppe oder ein Bestandteil der vorgenannten Teile.

Teil der Erfindung ist ferner ein System aus einem durchleuchtbaren Verkleidungsteil wie vorstehend beschrieben oder nach einem der Ansprüche 1 bis 5 und einem hinter der bestimmungsgemäßen Sichtseite des Grundkörpers angeordneten Leuchtelement. Der bestimmungsgemäßen Sichtseite des Grundkörpers entspricht bei dem System diejenige Seite des Grundkörpers auf welcher die farbgebende Beschichtung und die Klarlacksicht aufgebracht sind.

Das Leuchtelement weist bevorzugt eine Mindestleuchtstärke von 500 cd/m² auf.

Ein Verfahren zur Herstellung eines durchleuchtbaren Verkleidungsteils, insbesondere eines durchleuchtbaren Verkleidungsteils wie vorstehend beschrieben oder nach einem der Ansprüche 1 bis 5, umfasst die folgenden Schritte:
- Bereitstellen eines Grundkörpers aus einem transluzenten oder transparenten Polymermaterial, welches für Spektralbereiche des sichtbaren Lichts mit einer geringen Absorption durchstrahlbar ist, und
- Aufbringen wenigstens einer farbgebenden Beschichtung auf dem Grundkörper, wobei die farbgebende Beschichtung vorzugsweise durch eine Lackschicht oder eine Lackfolie gebildet ist, wobei die farbgebende Beschichtung die Spektralbereiche des sichtbaren Lichts weitestgehend absorbiert,
- Einbringen einer Vielzahl von punktförmigen Perforationen in die farbgebende Beschichtung, die die farbgebende Beschichtung vollständig durchdringen um eine Durchleuchtung des Grundkörpers zu ermöglichen,
- Aufbringen einer die farbgebende Beschichtung und die eingebrachten Perforationen versiegelnden Klarlackschicht über der perforierten farbgebenden Beschichtung, wobei die Klarlackschicht für Spektralbereiche des sichtbaren Lichts mit einer geringen Absorption durchstrahlbar ist,
wobei beim Einbringen der punktförmigen Perforationen der Durchmesser D der Perforationen so gewählt wird, dass dieser in einem Bereich von 175 µm bis 500 µm, bevorzugt in einem Bereich von 175 µm bis 300 µm, liegt und, wobei der Abstand A zwischen den Mittelpunkten M zueinander benachbarter Perforationen so gewählt wird, dass dieser Abstand A in einem Bereich zwischen dem 1,0-fachen bis 5,0 fachen, bevorzugt in einem Bereich zwischen dem 1,5-fachen bis 4,0-fachen des Durchmessers D der benachbarten Perforationen liegt, sodass beim Aufbringen der Klarlackschicht zusätzlich die Perforationen ausgefüllt werden.

Vorliegend werden unter punktförmigen Perforationen neben kreisförmigen Geometrien auch von einer reinen Kreisform abweichende Geometrien verstanden.

Der Schritt des Einbringens der punktförmigen Perforationen kann mittels eines Laserstrahls oder mittels mehrerer Laserstrahlen erfolgen.

Der Schritt des Bereitstellens des Grundkörpers kann ein Spritzgussverfahren oder ein Thermoformungsverfahren umfassen.

Im Folgenden wird die Erfindung anhand lediglich Ausführungsbeispiele darstellender Zeichnungen erläutert. Es zeigen schematisch:
- Fig. 1: eine schematische Darstellung der Teil-Außenansicht eines an einem Kraftfahrzeug montierten erfindungsgemäßen Verkleidungsteils;
- Fig. 2: eine schematische Draufsicht auf die Sichtseite des Schichtaufbaus eines erfindungsgemäßen durchleuchtbaren Verkleidungsteils;
- Fig. 3-4: Schnittdarstellungen durch ein erfindungsgemäßes System;
- Fig. 5: eine weitere schematische Draufsicht auf die Sichtseite des Schichtaufbaus eines erfindungsgemäßen durchleuchtbaren Verkleidungsteils.

In den Figuren werden gleiche oder funktionsgleiche Elemente mit den gleichen Bezugszeichen versehen.

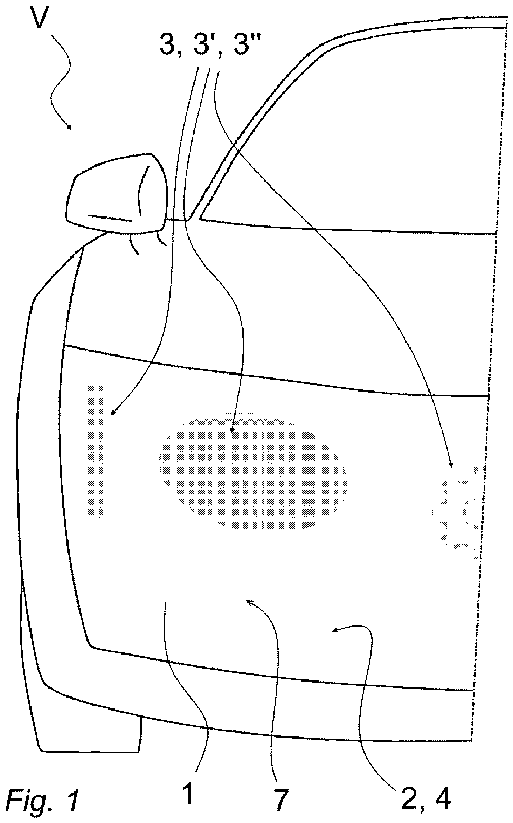

Die Fig. 1 zeigt eine Teil-Außenansicht der Sichtseite 7 eines Kraftfahrzeugs V mit einem erfindungsgemäßen durchleuchtbaren Verkleidungsteil für das Kraftfahrzeug V umfassend:
- einen Grundkörper 1 aus einem transluzenten oder transparenten Polymermaterial, welches für Spektralbereiche des sichtbaren Lichts mit einer geringen Absorption durchstrahlbar ist, und
- wenigstens eine auf dem Grundkörper 1 aufgebrachte farbgebende Beschichtung 2,
wobei die farbgebende Beschichtung 2 vorzugsweise durch eine Lackschicht oder eine Lackfolie gebildet ist, wobei die farbgebende Beschichtung 2 die Spektralbereiche des sichtbaren Lichts weitestgehend absorbiert.

Zur Durchleuchtung des Grundkörpers 1 weist die farbgebende Beschichtung 2 bereichsweise eine Vielzahl von punktförmigen Perforationen 3, 3', 3" auf, die die farbgebende Beschichtung 2 vollständig durchdringen. Über der perforierten farbgebenden Beschichtung 2 ist eine die farbgebende Beschichtung 2 und die Perforationen 3, 3', 3" versiegelnde Klarlackschicht 4, welche für Spektralbereiche des sichtbaren Lichts mit einer geringen Absorption durchstrahlbar ist, aufgebracht. Die punktförmigen Perforationen 3, 3', 3" ermöglichen es, dass das Verkleidungsteil bzw. der Grundkörper 1 des Verkleidungsteils durchleuchtbar ist und so Bereiche des Verkleidungsteils eine optische oder eine Signalfunktion übernehmen können. Als Beispiele angedeutet sind hier ein Seitenblinker oder eine Seitenmarkierungsleuchte, ein Tagfahrlicht oder Frontscheinwerfer und ein Markenemblem des Herstellers des Kraftfahrzeuges V.

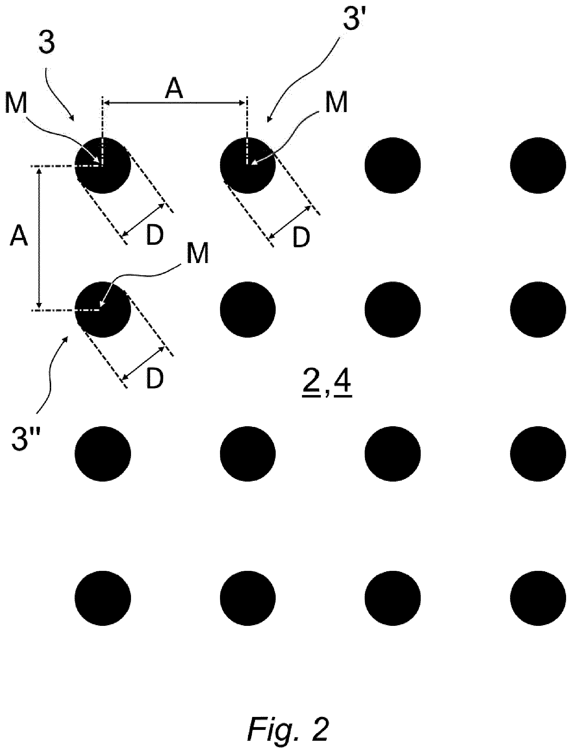

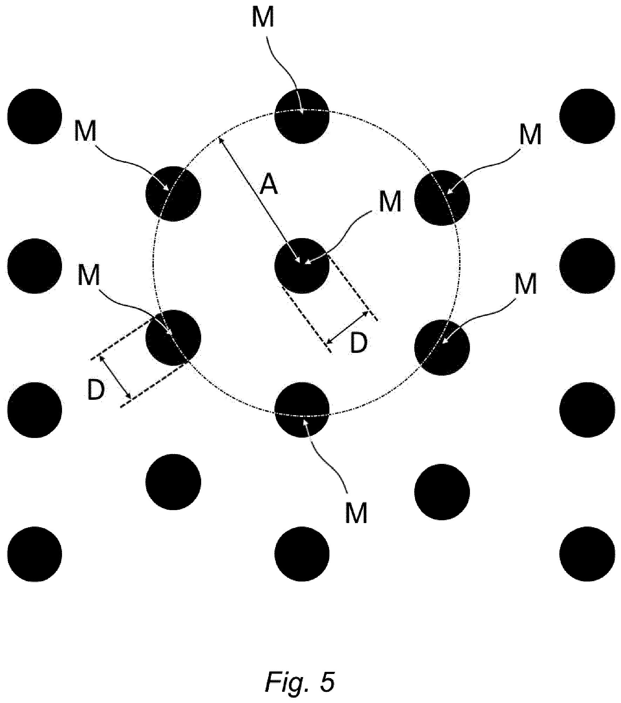

In Fig. 2 und in Fig. 5 sind jeweils in vergrößerten Draufsichten auf die Sichtseite 7 eines Verkleidungteils dargestellt, dass erfindungsgemäß der Durchmesser D der Perforationen 3, 3', 3" des vorstehend in Fig. 1 beschriebenen Verkleidungsteils in einem Bereich von 175 µm bis 500 µm, bevorzugt in einem Bereich von 175 µm bis 300 µm, liegt und hierbei der Abstand A zwischen den Mittelpunkten M zueinander benachbarter Perforationen 3, 3', 3" in einem Bereich zwischen dem 1,0-fachen bis 5,0-fachen, bevorzugt in einem Bereich zwischen dem 1,5-fachen bis 4,0-fachen des Durchmessers D der benachbarten Perforationen 3, 3', 3" liegt, sodass die Klarlackschicht 4 zusätzlich die Perforationen 3, 3', 3" ausfüllt. In Fig. 5 sind die Perforationen 3, 3', 3" im Vergleich zu den Perforationen 3, 3', 3" in Fig. 2 ebenfalls gleichmäßig, jedoch zueinander versetzt angeordnet. Eine derartige versetzte Anordnung liefert in einigen Anwendungsfällen einen weiter verbesserten optischen Eindruck, wenn sichtbares Licht das Verkleidungsteil durchdringt.

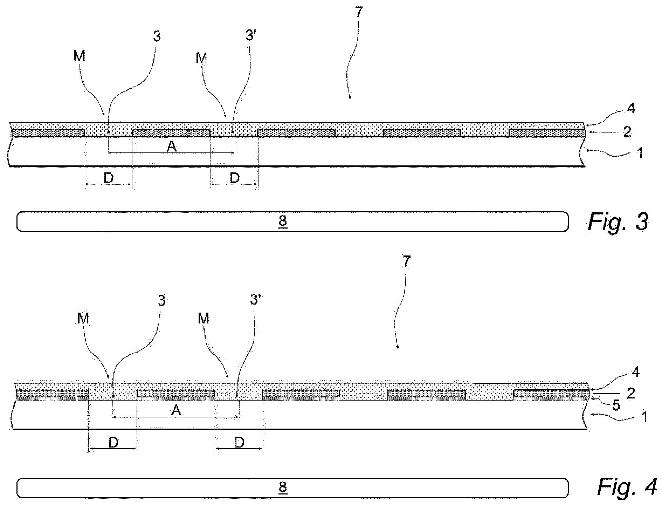

In den Fig. 3 und Fig. 4 ist der Aufbau des erfindungsgemäßen Verkleidungsteils bzw. eines erfindungsgemäßen Systems dargestellt.

Das durchleuchtbare Verkleidungsteil für ein Kraftfahrzeug umfasst:
- einen Grundkörper 1 aus einem transluzenten oder transparenten Polymermaterial, welches für Spektralbereiche des sichtbaren Lichts mit einer geringen Absorption durchstrahlbar ist, und
- wenigstens eine auf dem Grundkörper 1 aufgebrachte farbgebende Beschichtung 2,
wobei die farbgebende Beschichtung 2 vorzugsweise durch eine Lackschicht oder eine Lackfolie gebildet ist, wobei die farbgebende Beschichtung 2 die Spektralbereiche des sichtbaren Lichts weitestgehend absorbiert. Zur Durchleuchtung des Grundkörpers 1 weist die farbgebende Beschichtung 2 bereichsweise eine Vielzahl von punktförmigen Perforationen 3, 3', 3" auf, die die farbgebende Beschichtung 2 vollständig durchdringen. Über der perforierten farbgebenden Beschichtung 2 ist eine die farbgebende Beschichtung 2 und die Perforationen 3, 3', 3" versiegelnde Klarlackschicht 4, welche für Spektralbereiche des sichtbaren Lichts mit einer geringen Absorption durchstrahlbar ist, aufgebracht.

Der Durchmesser D der Perforationen 3, 3', 3" liegt in einem Bereich von 175 µm bis 500 µm, bevorzugt in einem Bereich von 175 µm bis 300 µm, und der Abstand A zwischen den Mittelpunkten M zueinander benachbarter Perforationen 3, 3', 3" liegt in einem Bereich zwischen dem 1,0-fachen bis 5,0-fachen, bevorzugt in einem Bereich zwischen dem 1,5-fachen bis 4,0-fachen des Durchmessers D der benachbarten Perforationen 3, 3', 3", sodass die Klarlackschicht 4 zusätzlich die Perforationen 3, 3', 3" ausfüllt.

Bei dem gezeigten erfindungsgemäßen System ist hinter der bestimmungsgemäßen Sichtseite 7 des Grundkörpers 1 ein Leuchtelement 8 angeordnet, wobei das Leuchtelement vorzugsweise ein Leuchtelement 8 mit einer Mindestleuchtstärke von 500 cd/m² ist.

Im Unterschied zu Fig. 3 ist oder sind bei dem in Fig. 4 dargestellten Verkleidungsteil bzw. System zwischen dem Grundkörper 1 und der farbgebenden Beschichtung 2 zusätzlich eine Haftvermittlerschicht 5 oder Haftvermittlerschichten angeordnet. Die Vielzahl von punktförmigen Perforationen 3, 3', 3" durchdringen auch die Haftvermittlerschicht 5 oder die Haftvermittlerschichten vollständig.

Für alle vorstehend beschriebenen Ausführungsbeispiele in den Fig. 1 bis 4 gilt gleichermaßen, dass das transluzente oder transparente Polymermaterial des Grundkörpers 1 Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthält oder hieraus gebildet sein kann.

Das transluzente oder transparente Polymermaterial des Grundkörpers 1 kann ein für wenigstens eine Laserwellenlänge transparentes Material sein.

Der Grundkörper 1 weist bevorzugt eine Wandstärke im Bereich von 0,8 mm bis 4,5 mm auf.

Das Verkleidungsteil kann neben einer in Fig. 1 gezeigten Stoßfängerverkleidung auch eine Heckklappenverkleidung oder eine Kotflügelverkleidung oder ein Spoiler eines Kraftfahrzeuges, oder ein Bauteil oder eine Baugruppe oder ein Bestandteil der vorgenannten Teile sein.

Ein Verfahren zur Herstellung eines durchleuchtbaren Verkleidungsteils gemäß den vorstehenden Ausführungsbeispielen, oder gemäß einem der Ansprüche 1 bis 5 kann wie folgt charakterisiert sein.

Verfahren zur Herstellung eines durchleuchtbaren Verkleidungsteils umfassend die folgenden Schritte:
- Bereitstellen eines Grundkörpers 1 aus einem transluzenten oder transparenten Polymermaterial, welches für Spektralbereiche des sichtbaren Lichts mit einer geringen Absorption durchstrahlbar ist, und
- Aufbringen wenigstens einer farbgebenden Beschichtung 2 auf dem Grundkörper 1, wobei die farbgebende Beschichtung 2 vorzugsweise durch eine Lackschicht oder eine Lackfolie gebildet ist, wobei die farbgebende Beschichtung 2 die Spektralbereiche des sichtbaren Lichts weitestgehend absorbiert,
- Einbringen einer Vielzahl von punktförmigen Perforationen 3, 3', 3" in die farbgebende Beschichtung 2, die die farbgebende Beschichtung 2 vollständig durchdringen um eine Durchleuchtung des Grundkörpers 1 zu ermöglichen,
- Aufbringen einer die farbgebende Beschichtung 2 und die eingebrachten Perforationen 3, 3', 3" versiegelnden Klarlackschicht 4 über der perforierten farbgebenden Beschichtung 2, wobei die Klarlackschicht 4 für Spektralbereiche des sichtbaren Lichts mit einer geringen Absorption durchstrahlbar ist,
wobei beim Einbringen der punktförmigen Perforationen 3, 3', 3" der Durchmesser D der Perforationen 3, 3', 3" so gewählt wird, dass dieser in einem Bereich von 175 µm bis 500 µm, bevorzugt in einem Bereich von 175 µm bis 300 µm, liegt und, wobei der Abstand A zwischen den Mittelpunkten M zueinander benachbarter Perforationen 3, 3', 3" so gewählt wird, dass dieser Abstand A in einem Bereich zwischen dem 1,0-fachen bis 5,0 fachen, bevorzugt in einem Bereich zwischen dem 1,5-fachen bis 4,0-fachen des Durchmessers D der benachbarten Perforationen 3, 3', 3" liegt, sodass beim Aufbringen der Klarlackschicht 4 zusätzlich die Perforationen 3, 3', 3" ausgefüllt werden.

Der Schritt des Einbringens der punktförmigen Perforationen 3, 3', 3" kann mittels eines Laserstrahls oder mittels mehrerer Laserstrahlen erfolgen.

Der Schritt des Bereitstellens des Grundkörpers 1 kann ein Spritzgussverfahren oder ein Thermoformungsverfahren umfassen.

## Patentansprüche

1. Durchleuchtbares Verkleidungsteil für ein Kraftfahrzeug (V) umfassend:
- einen Grundkörper (1) aus einem transluzenten oder transparenten Polymermaterial, welches für Spektralbereiche des sichtbaren Lichts mit einer geringen Absorption durchstrahlbar ist, und
- wenigstens eine auf dem Grundkörper (1) aufgebrachte farbgebende Beschichtung (2),
wobei die farbgebende Beschichtung (2) vorzugsweise durch eine Lackschicht oder eine Lackfolie gebildet ist, wobei die farbgebende Beschichtung (2) die Spektralbereiche des sichtbaren Lichts weitestgehend absorbiert und,
wobei zur Durchleuchtung des Grundkörpers (1) die farbgebende Beschichtung (2) bereichsweise eine Vielzahl von punktförmigen Perforationen (3, 3', 3") aufweist, die die farbgebende Beschichtung (2) vollständig durchdringen und,
wobei über der perforierten farbgebenden Beschichtung (2) eine die farbgebende Beschichtung (2) und die Perforationen (3, 3', 3") versiegelnde Klarlackschicht (4), welche für Spektralbereiche des sichtbaren Lichts mit einer geringen Absorption durchstrahlbar ist, aufgebracht ist,
wobei das Verkleidungsteil eine Stoßfängerverkleidung oder eine Heckklappenverkleidung oder eine Kotflügelverkleidung oder ein Spoiler eines Kraftfahrzeuges, oder ein Bauteil oder eine Baugruppe oder ein Bestandteil der vorgenannten Teile ist,
**dadurch gekennzeichnet, dass**
der Durchmesser D der Perforationen (3, 3', 3") in einem Bereich von 175 µm bis 500 µm liegt und,
dass der Abstand A zwischen den Mittelpunkten M zueinander benachbarter Perforationen (3, 3', 3") in einem Bereich zwischen dem 1,0-fachen bis 5,0-fachen, bevorzugt in einem Bereich zwischen dem 1,5-fachen bis 4,0-fachen des Durchmessers D der benachbarten Perforationen (3, 3', 3") liegt,
sodass die Klarlackschicht (4) ergänzend auch die Perforationen (3, 3', 3") ausfüllt.

2. Durchleuchtbares Verkleidungsteil nach Anspruch 1, **dadurch gekennzeichnet, dass** zwischen dem Grundkörper (1) und der farbgebenden Beschichtung (2) zusätzlich eine Haftvermittlerschicht (5) oder Haftvermittlerschichten angeordnet ist oder sind, wobei vorzugsweise die Vielzahl von punktförmigen Perforationen (3, 3', 3") auch die Haftvermittlerschicht (5) oder die Haftvermittlerschichten vollständig durchdringen.

3. Durchleuchtbares Verkleidungsteil nach einem der vorstehenden Ansprüche 1 oder 2, **dadurch gekennzeichnet, dass** das transluzente oder transparente Polymermaterial des Grundkörpers (1) Polypropylen und/oder Polycarbonat und/oder Polyethylenterephthalat und/oder Polycarbonat und/oder Acrylnitril-Butadien-Styrol und/oder Polymethylmethacrylat und/oder Polyamid enthält oder hieraus gebildet ist.

4. Durchleuchtbares Verkleidungsteil nach einem der vorstehenden Ansprüche, **dadurch gekennzeichnet, dass** das transluzente oder transparente Polymermaterial des Grundkörpers (1) ein für wenigstens eine Laserwellenlänge transparentes Material ist.

5. Durchleuchtbares Verkleidungsteil nach einem der vorstehenden Ansprüche, **dadurch gekennzeichnet, dass** der Grundkörper (1) eine Wandstärke im Bereich von 0,8 mm bis 4,5 mm aufweist.

6. System aus einem durchleuchtbaren Verkleidungsteil nach einem der vorstehenden Ansprüche und einem hinter der bestimmungsgemäßen Sichtseite (7) des Grundkörpers (1) angeordneten Leuchtelement (8), wobei das Leuchtelement vorzugsweise ein Leuchtelement (8) mit einer Mindestleuchtstärke von 500 cd/m² ist.

7. Verfahren zur Herstellung eines durchleuchtbaren Verkleidungsteils nach einem der vorstehenden Ansprüche 1 bis 5, umfassend die folgenden Schritte:
- Bereitstellen eines Grundkörpers (1) aus einem transluzenten oder transparenten Polymermaterial, welches für Spektralbereiche des sichtbaren Lichts mit einer geringen Absorption durchstrahlbar ist, und
- Aufbringen wenigstens einer farbgebenden Beschichtung (2) auf dem Grundkörper (1), wobei die farbgebende Beschichtung (2) vorzugsweise durch eine Lackschicht oder eine Lackfolie gebildet ist, wobei die farbgebende Beschichtung (2) die Spektralbereiche des sichtbaren Lichts weitestgehend absorbiert,
- Einbringen einer Vielzahl von punktförmigen Perforationen (3, 3', 3") in die farbgebende Beschichtung (2), die die farbgebende Beschichtung (2) vollständig durchdringen um eine Durchleuchtung des Grundkörpers (1) zu ermöglichen,
- Aufbringen einer die farbgebende Beschichtung (2) und die eingebrachten Perforationen (3, 3', 3") versiegelnden Klarlackschicht (4) über der perforierten farbgebenden Beschichtung (2), wobei die Klarlackschicht (4) für Spektralbereiche des sichtbaren Lichts mit einer geringen Absorption durchstrahlbar ist,
**dadurch gekennzeichnet, dass**
beim Einbringen der punktförmigen Perforationen (3, 3', 3") der Durchmesser D der Perforationen (3, 3', 3") so gewählt wird, dass dieser in einem Bereich von 175 µm bis 500 µm liegt und,
dass der Abstand A zwischen den Mittelpunkten M zueinander benachbarter Perforationen (3, 3', 3") so gewählt wird, dass dieser Abstand A in einem Bereich zwischen dem 1,0-fachen bis 5,0-fachen des Durchmessers D der benachbarten Perforationen (3, 3', 3") liegt, sodass beim Aufbringen der Klarlackschicht (4) ergänzend auch die Perforationen (3, 3', 3") ausgefüllt werden.

8. Verfahren zur Herstellung eines durchleuchtbaren Verkleidungsteils nach Anspruch 7, **dadurch gekennzeichnet, dass** der Schritt des Einbringens der punktförmigen Perforationen (3, 3', 3") mittels eines Laserstrahls oder mittels mehrerer Laserstrahlen erfolgt.

9. Verfahren zur Herstellung eines durchleuchtbaren Verkleidungsteils nach Anspruch 7 oder 8, **dadurch gekennzeichnet, dass** der Schritt des Bereitstellens des Grundkörpers (1) ein Spritzgussverfahren oder ein Thermoformungsverfahren umfasst.

## Claims

1. Trim part which can be transilluminated for a motor vehicle (V) comprising:
- a base body (1) made of a translucent or transparent polymer material through which spectral ranges of visible light can be irradiated with low absorption, and
- at least one colouring coating (2) applied to the base body (1),
wherein the colouring coating (2) is preferably formed by a paint layer or a paint film, wherein the colouring coating (2) largely absorbs the spectral ranges of visible light and,
wherein for transillumination of the base body (1), the colouring coating (2) has, in some regions, a plurality of dot-like perforations (3, 3', 3") which completely penetrate the colouring coating (2) and,
wherein over the perforated colouring coating (2), a clear paint layer (4) which seals the colouring coating (2) and the perforations (3, 3', 3") is applied, through which clear paint layer spectral ranges of visible light can be irradiated with low absorption,
wherein the trim part is a bumper trim or a tailgate trim or a wing trim or a spoiler of a motor vehicle, or a component or assembly or constituent part of the aforementioned parts,
**characterised in that**
the diameter D of the perforations (3, 3', 3") is in a range between 175 µm and 500 µm and,
the distance A between the centre points M of adjacent perforations (3, 3', 3") is in a range between 1.0 times and 5.0 times, preferably in a range between 1.5 times and 4.0 times, the diameter D of the adjacent perforations (3, 3', 3"),
such that the clear paint layer (4) additionally also fills the perforations (3, 3', 3").

2. Trim part which can be transilluminated according to claim 1, **characterised in that** a bonding agent layer (5) or bonding agent layers is or are additionally arranged between the base body (1) and the colouring coating (2), wherein preferably the plurality of dot-like perforations (3, 3', 3") also completely penetrate the bonding agent layer (5) or bonding agent layers.

3. Trim part which can be transilluminated according to one of preceding claims 1 or 2, **characterised in that** the translucent or transparent polymer material of the base body (1) contains polypropylene and/or polycarbonate and/or polyethylene terephthalate and/or polycarbonate and/or acrylonitrile butadiene styrene and/or polymethylmethacrylate and/or polyamide, or is formed herefrom.

4. Trim part which can be transilluminated according to one of the preceding claims, **characterised in that** the translucent or transparent polymer material of the base body (1) is a material that is transparent for at least one laser wavelength.

5. Trim part which can be transilluminated according to one of the preceding claims, **characterised in that** the base body (1) has a wall thickness in the range between 0.8 mm and 4.5 mm.

6. System of a trim part which can be transilluminated according to one of the preceding claims and a light-emitting element (8) arranged behind the visible side (7) of the base body (1) when used as intended, wherein the light-emitting element is preferably a light-emitting element (8) having a minimum luminance of 500 cd/m².

7. Method for producing a trim part which can be transilluminated according to one of preceding claims 1-5, comprising the following steps:
- providing a base body (1) made of a translucent or transparent polymer material through which spectral ranges of visible light can be irradiated with low absorption, and
- applying at least one colouring coating (2) on the base body (1), wherein the colouring coating (2) is preferably formed by a paint layer or a paint film, wherein the colouring coating (2) largely absorbs the spectral ranges of visible light,
- introducing into the colouring coating (2) a plurality of dot-like perforations (3, 3', 3") which completely penetrate the colouring coating (2) in order to enable a transillumination through the base body (1),
- applying a clear paint layer (4), which seals the colouring coating (2) and the introduced perforations (3, 3', 3"), over the perforated colouring coating (2), wherein the clear paint layer (4) can be radiated through with spectral ranges of visible light with low absorption,
**characterised in that**
when introducing the dot-like perforations (3, 3', 3"), the diameter D of the perforations (3, 3', 3") is selected such that said diameter is in a range between 175 µm and 500 µm, and
the distance A between the centre points M of adjacent perforations (3, 3', 3") is selected such that said distance A is in a range between 1.0 times and 5.0 times the diameter D of the adjacent perforations (3, 3', 3") such that when the clear paint layer (4) is applied, the perforations (3, 3', 3") are additionally also filled.

8. Method for producing a trim part which can be transilluminated according to claim 7, **characterised in that** the step of introducing the dot-like perforations (3, 3', 3") is carried out by means of a laser beam or by means of a plurality of laser beams.

9. Method for producing a trim part which can be transilluminated according to claim 7 or 8, **characterised in that** the step of providing the base body (1) comprises an injection moulding method or a thermoforming method.

## Revendications

1. Partie d'habillage transparente pour un véhicule à moteur (V), comprenant :
- un corps de base (1) composé d'un matériau polymère translucide ou transparent, lequel peut être irradié avec une absorption modérée pour des domaines spectraux de la lumière visible, et
- au moins un revêtement colorant (2) appliqué sur le corps de base (1),
dans laquelle le revêtement colorant (2) est formé de préférence par une couche de vernis ou un film de vernis, dans laquelle le revêtement colorant (2) absorbe largement les domaines spectraux de la lumière visible, et
dans laquelle le revêtement colorant (2) présente par endroits une pluralité de perforations en forme de points (3, 3', 3"), qui traversent en totalité le revêtement colorant (2), pour l'éclairage par transparence du corps de base (1), et
dans laquelle une couche de vernis transparent (4) scellant le revêtement colorant (2) et les perforations (3, 3', 3"), laquelle peut être irradiée avec une absorption modérée pour des domaines spectraux de la lumière visible, est appliquée par-dessus le revêtement colorant (2) perforé,
dans laquelle la partie d'habillage est un habillage de pare-chocs ou un habillage de hayon ou un habillage de garde-boue ou un déflecteur d'un véhicule à moteur, ou un composant ou un module ou un élément constitutif des parties susmentionnées,
**caractérisée en ce que**
le diamètre D des perforations (3, 3', 3") se situe dans une plage de 175 µm à 500 µm, et que la distance A entre les points centraux M les uns par rapport aux autres de perforations (3, 3', 3") adjacentes se situe dans une plage entre 1,0 fois à 5,0 fois, de manière préférée dans une plage entre 1,5 fois à 4,0 fois le diamètre D des perforations (3, 3', 3") adjacentes,
si bien que la couche de vernis transparent (4) remplit en complément également les perforations (3, 3', 3").

2. Partie d'habillage transparente selon la revendication 1, **caractérisée en ce qu'**est disposée ou sont disposées entre le corps de base (1) et le revêtement colorant (2) en supplément une couche ou des couches de promoteur d'adhérence (5), dans laquelle de préférence la pluralité de perforations (3, 3', 3") en forme de points traverse en totalité également la ou les couches de promoteur d'adhérence (5).

3. Partie d'habillage transparente selon l'une quelconque des revendications précédentes 1 ou 2, **caractérisée en ce que** le matériau polymère translucide ou transparent du corps de base (1) contient du polypropylène et/ou du polycarbonate et/ou du polytéréphtalate d'éthylène et/ou du polycarbonate et/ou de l'acrylonitrile butadiène styrène et/ou du polyméthacrylate de méthyle et/ou du polyamide ou en est formé.

4. Partie d'habillage transparente selon l'une quelconque des revendications précédentes, **caractérisée en ce que** le matériau polymère translucide ou transparent du corps de base (1) est un matériau transparent pour au moins une longueur d'onde laser.

5. Partie d'habillage transparente selon l'une quelconque des revendications précédentes, **caractérisée en ce que** le corps de base (1) présente une épaisseur de paroi dans la plage de 0,8 mm à 4,5 mm.

6. Système composé d'une partie d'habillage transparente selon l'une quelconque des revendications précédentes et d'un élément d'éclairage (8) disposé derrière le côté visible (7) conforme à l'usage prévu du corps de base (1), dans lequel l'élément d'éclairage est de préférence un élément d'éclairage (8) avec une intensité d'éclairage minimale de 500 cd/m².

7. Procédé pour fabriquer une partie d'habillage transparente selon l'une quelconque des revendications 1 à 5, comprenant les étapes suivantes :
- de mise à disposition d'un corps de base (1) composé d'un matériau polymère translucide ou transparent, lequel peut être irradié avec une absorption modérée pour des domaines spectraux de la lumière visible, et
- d'application d'au moins un revêtement colorant (2) sur le corps de base (1), dans lequel le revêtement colorant (2) est formé de préférence par une couche de vernis ou un film de vernis, dans lequel le revêtement colorant (2) absorbe largement les domaines spectraux de la lumière visible,
- de réalisation d'une pluralité de perforations (3, 3', 3") en forme de points dans le revêtement colorant (2), qui traversent en totalité le revêtement colorant (2) pour permettre un éclairage par transparence du corps de base (1),
- d'application d'une couche de vernis transparent (4) scellant le revêtement colorant (2) et les perforations (3, 3', 3") réalisées au-dessus du revêtement colorant (2) perforé, dans lequel la couche de vernis transparent (4) peut être irradiée avec une absorption modérée pour des domaines spectraux de la lumière visible,
**caractérisé en ce que**
lors de la réalisation des perforations (3, 3', 3") en forme de points, le diamètre D des perforations (3, 3', 3') est choisi de telle sorte que celui-ci se situe dans une plage de 175 µm à 500 µm, et
que la distance A entre les points centraux M les uns par rapport aux autres de perforations (3, 3', 3") adjacentes est choisie de telle sorte que ladite distance A se situe dans une plage entre 1,0 fois à 5,0 fois le diamètre D des perforations (3, 3', 3") adjacentes si bien qu'en complément également, lors de l'application de la couche de vernis transparent (4), les perforations (3, 3', 3") sont remplies.

8. Procédé pour fabriquer une partie d'habillage transparente selon la revendication 7, **caractérisé en ce que** l'étape de la réalisation des perforations (3, 3', 3") en forme de points est effectuée au moyen d'un rayon laser ou au moyen de plusieurs rayons laser.

9. Procédé pour fabriquer une partie d'habillage transparente selon la revendication 7 ou 8, **caractérisé en ce que** l'étape de la mise à disposition du corps de base (1) comprend un procédé de moulage par injection ou un procédé de thermoformage.
